# EUROPÄISCHE PATENTANMELDUNG

(11) **EP 1 837 483 A1**
(43) Veröffentlichungstag der Anmeldung: **26.09.2007**
(21) Anmeldenummer: 06005651.2
(22) Anmeldetag: 20.03.2006
(51) Int. Cl.: F01D 5/06, B23K 35/00

(54) **Geschweisste Welle für Strömungsmaschinen**

(71) Anmelder: SIEMENS AKTIENGESELLSCHAFT, 80333 München (DE)
(72) Erfinder: Kern, Torsten-Ulf Dr., 46485 Wesel (DE); Kostenko, Yevgen Dr., 40878 Ratingen (DE); Sheng, Shilun Dr., 46149 Oberhausen (DE)

(57) **Zusammenfassung**

Die Erfindung betrifft eine geschweißte Turbinenwelle (1), die ein Vorderstück (3) und ein Hinterstück (5) umfasst, wobei zwischen dem Vorderstück (3) und dem Hinterstück (5) ein Zwischenstück (6) angeordnet wird. Das Zwischenstück (6) weist im Wesentlichen gleich große Wärmeausdehnungskoeffizienten wie das erste Material und eine im Wesentlichen mindestens gleich große Zeitstandfestigkeit wie das zweite Material auf. Das erste und zweite Material weisen unterschiedliche Wärmeausdehnungskoeffizienten auf. Des Weiteren ist die Zeitstandfestigkeit des zweiten Materials höher als die Zeitstandfestigkeit des ersten Materials.

Dadurch kann die Schweißnaht zu höheren Temperaturen hin verschoben werden. Bei gleicher Betriebstemperatur wird die Bauteilsicherheit bzw. das flexiblere Anfahrverhalten des Turbosatzes erhöht.

## Beschreibung

Die Erfindung betrifft eine Welle für eine Strömungsmaschine, umfassend ein Vorderstück aus einem ersten Material und einem in Achsrichtung dahinter angeordnetem Hinterstück aus einem zweiten Material, wobei das erste und zweite Material unterschiedliche Wärmeausdehnungskoeffizienten aufweisen und die Zeitstandfestigkeit des zweiten Materials höher ist als die Zeitstandfestigkeit des ersten Materials. Die Erfindung betrifft des Weiteren ein Verfahren zum Herstellen einer Welle für eine Strömungsmaschine, wobei ein Vorderstück aus einem ersten Material und ein Hinterstück aus einem zweiten Material miteinander verbunden werden.

Turbinenwellen werden in der Regel in Strömungsmaschinen eingesetzt. Eine Dampfturbine als Ausführungsform einer Strömungsmaschine weist im Betrieb entlang der Turbinenwelle unterschiedliche Temperaturen auf. So sind im Einströmbereich der Dampfturbine einzelne Bauteile, wie z.B. die Welle thermisch stark belastet. Insbesondere bei Hochdruck-Dampfturbinen, bei denen der Dampf Temperaturen von über 600°C bei Drücken von über 300 bar aufweisen kann, werden ein Teil der Welle und Teile des Innengehäuses und Außengehäuses thermisch stark beansprucht. Der Frischdampf wird in der Dampfturbine entspannt, wodurch die Temperatur sinkt. Die thermische Belastung der Turbinenwelle wird entlang der Strömungsrichtung des Dampfes geringer.

Unter einer Dampfturbine im Sinne der vorliegenden Anmeldung wird jede Turbine oder Teilturbine verstanden, die von einem Arbeitsmedium in Form von Dampf durchströmt wird. Im Unterschied dazu werden Gasturbinen mit Gas und/oder Luft als Arbeitsmedium durchströmt, das jedoch völlig anderen Temperatur- und Druckbedingungen unterliegt als der Dampf bei einer Dampfturbine. Im Gegensatz zu Gasturbinen weist bei Dampfturbinen zum Beispiel das einer Teilturbine zuströmende Arbeitsmedium mit der höchsten Temperatur gleichzeitig den höchsten Druck auf.

Die mit Schaufeln besetzte, drehbar gelagerte und innerhalb des Gehäusemantels angeordnete Turbinenwelle wird durch den Dampf in Drehung versetzt. Die Schaufeln der Turbinenwelle werden auch als Laufschaufeln bezeichnet. Am Gehäusemantel sind darüber hinaus üblicherweise stationäre Leitschaufeln aufgehängt, welche in die Zwischenräume der Laufschaufeln greifen.

Dampfturbinen oder Dampfteilturbinen können in Hochdruck-, Mitteldruck oder Niederdruck-Teilturbinen eingeteilt werden. Die Eingangstemperaturen und Drücke bei Hochdruck-Teilturbinen können je nach eingesetztem Werkstoff bis über 620°C und über 300 bar betragen. Eine scharfe Trennung zwischen Hochdruck-, Mitteldruck- oder Niederdruck-Teilturbinen wurde in der Fachwelt bislang nicht einheitlich definiert.

Der Turbinenwellenwerkstoff muss sorgfältig ausgewählt werden, da im Betrieb die Dampfturbine mit dem hohe Dampfparameter aufweisenden Dampf betrieben werden soll. Solche Turbinenwellen sollten eine hohe Zeitstandfestigkeit bei hohen Temperaturen aufweisen. Eine geeignete Werkstoffklasse sind die so genannten warmfesten 9 - 10%igen Chrom-Stähle. Eine Bezeichnung für einen 10%igen Chromstahl wäre z. B. X12CrMoWVNbN10-1-1. Der vorgenannte Werkstoff ist allerdings vergleichsweise teuer aufgrund der Legierungselemente wie Cr und Mo. Außerdem kann die Fertigung vergleichsweise langwierig sein. Das bedeutet, dass der Zeitraum zwischen einer Bestellung des Werkstoffs bei einem Stahlhersteller und der Lieferung oft unerwünschte Zeiträume dauert. Dem gegenüber sind 1 bis 2%ige Chrom-Stähle, die man auch als konventionelle Stähle bezeichnen könnte, vergleichsweise günstig und schneller herstellbar. Allerdings zeigen 1 bis 2%ige Chromstähle geringere warmfeste Eigenschaften als 10%ige Chromstähle.

Es ist bekannt, Turbinenwellen aus einem 10%igen Chromstahl und einem 1 bis 2%igen Chromstahl miteinander zu verschwei-ßen. Der Bereich des 10%igen Chromstahls wird den heißen Dampfeinlasstemperaturen ausgesetzt, wobei der 1 bis 2%ige Chromstahl in Strömungsrichtung gesehen niedrigeren Temperaturen und niedrigen Drücken des Dampfes ausgesetzt wird. Allerdings weisen der warmfeste 10%ige Chromstahl und der 1 bis 2%ige Chromstahl unterschiedliche Wärmeausdehnungskoeffizienten auf. Nach einem Schweißvorgang, bei dem diese beiden Werkstoffe miteinander verschweißt werden, treten hohe Eigenspannungen im Bereich der Schweißnaht auf. Im Betrieb treten unerwünschte Sekundärspannungen (Wärmespannungen) zusätzlich auf. Dies führt dazu, dass eine solch hergestellte Turbinenwelle lediglich in einem begrenzten Temperaturbereich eingesetzt werden kann. Erfahrungswerte haben gezeigt, dass eine solch hergestellte Welle dort eingesetzt werden kann, wo die Schweißnaht nicht höhere Temperaturen als 450°C aufweist. Mit anderen Worten, eine solche geschweißte Turbinenwelle weist eine vergleichsweise hohe Menge an warmfestem 10%igem Chromstahl auf, der auf der einen Seite mit Dampf von über 600°C belastet wird und auf der anderen Seite mit einer Temperatur von 450°C belastet wird.

An dieser Stelle setzt die Erfindung an, dessen Aufgabe es ist, eine Turbinenwelle bereitzustellen, die schnell herstellbar ist und eine flexiblere Fahrweise der Turbine erlaubt.

Die Aufgabe wird gelöst durch eine Welle für eine Strömungsmaschine, umfassend ein Vorderstück aus einem ersten Material und einem in Achsrichtung dahinter angeordneten Hinterstück aus einem zweiten Material, wobei das erste und zweite Material unterschiedliche Wärmeausdehnungskoeffizienten aufweisen und die Zeitstandfestigkeit des zweiten Materials höher ist als die Zeitstandfestigkeit des ersten Materials, wobei ein Zwischenstück aus einem Zwischenmaterial zwischen dem Vorderstück und dem Hinterstück angeordnet ist, wobei das Zwischenmaterial einen im Wesentlichen gleich großen Wärmeausdehnungskoeffizienten wie das erste Material und eine im Wesentlichen gleich große Zeitstandfestigkeit wie das zweite Material aufweist.

Des Weiteren ist es Aufgabe der Erfindung, ein Verfahren zur Herstellung einer solchen Welle anzugeben.

Diese Aufgabe wird gelöst, indem ein Verfahren zur Herstellung einer Welle eingesetzt wird, wobei ein Vorderstück aus einem ersten Material und ein Hinterstück aus einem zweiten Material miteinander verbunden werden, wobei ein Zwischenstück aus einem warmfesten Material zwischen das Vorderstück und das Hinterstück angeordnet wird, wobei das Vorderstück und das Hinterstück an das Zwischenstück angeschweißt werden.

Die Erfindung zeichnet sich dadurch aus, dass ein Zwischenstück aus einem geeigneten Zwischenmaterial eingesetzt wird. Das Zwischenmaterial weist verschiedene Eigenschaften auf. So weist zum Beispiel das Zwischenmaterial einen im Wesentlichen gleich großen Wärmeausdehnungskoeffizienten wie das erste Material auf, das bedeutet, dass hohe Wärmespannungen und Eigenspannungen nach einer Schweißung des Zwischenstückes an das erste Material kaum auftreten. Auf der anderen Seite weist das Zwischenmaterial eine im Wesentlichen mindestens gleich große Zeitstandfestigkeit wie das zweite Material auf. Dadurch wird der Effekt erreicht, dass die hohen Wärme- bzw. Eigenspannungen in die Schweißnahtzone der beiden hochwertigen Werkstoffe verlagert werden können und somit die Schweißnaht zwischen dem ersten Material und dem Zwischenmaterial an einer Stelle der Turbinenwelle liegen kann, an der vergleichsweise höhere Temperaturen als ohne Zwischenstückschweißung auftreten. Man benötigt sozusagen weniger vom zweiten Material. Die geringere Masse des zweiten Materials lässt sich schneller und günstiger beschaffen. Die Lieferzeit des Turbosatzes wird dadurch verkürzt. Andererseits werden bei gleicher Bauweise ohne Zwischenstückschweißung die Bauteilsicherheit und das flexible Anfahrverhalten deutlich erhöht.

In einer vorteilhaften Weiterbildung umfasst das Vorderstück das Material 23CrMoNiWV8-8, 30CrMoNiVS-11 oder andere 1 bis 2%ige Stähle nach SEW 555, Ausgabe 2001.

Gerade diese Materialien sind geeignet für die weiter oben genannte Turbinenwelle. Insbesondere weist das Vorderstück folgende Legierungszusammensetzung auf:

| 30CrMoNiV5-11 | |
|---|---|
| 0,28 - 0,34 | Gew.-% C, |
| <= 0,15 | Gew.-% Si, |
| 0,30 - 0,80 | Gew.-% Mn, |
| <= 0,010 | Gew.-% P, |
| <= 0,007 | Gew.-% S, |
| 1,10 - 1,40 | Gew.-% Cr, |
| 1,00 - 1,20 | Gew.-% Mo, |
| 0,50 - 0,75 | Gew.-% Ni, |
| 0,25 - 0,35 | Gew.-% V, |
| <= 0,010 | Gew.-% Al, |
| Rest Fe | |

oder

| | |
|---|---|
| 0,20 - 0,35 | Gew.-% C, |
| <= 0,30 | Gew.-% Si, |
| 0,30 - 0,80 | Gew.-% Mn, |
| <= 0,010 | Gew.-% P, |
| <= 0,007 | Gew.-% S, |
| 1,00 - 2,20 | Gew.-% Cr, |
| 0,70 - 1,20 | Gew.-% Mo, |
| 0,50 - 1,20 | Gew.-% Ni, |
| 0,25 - 0,35 | Gew.-% V, |
| <= 0,010 | Gew.-% Al, |
| 0,30 - 1,00 | Gew.-% W |
| Rest Fe. | |

Alternativ hierzu kann das Vorderstück die folgenden Legierungszusammensetzungen nach SEW 555 aufweisen:

| 23 CrMoNiWV8-8 | |
|---|---|
| 0,20 - 0,24 | Gew.-% C, |
| <= 0,10 | Gew.-% Si, |
| 0,60 - 0,80 | Gew.-% Mn, |
| <= 0,010 | Gew.-% P, |
| <= 0,007 | Gew.-% S, |
| 2,00 - 2,20 | Gew.-% Cr, |
| 0,80 - 0,90 | Gew.-% Mo, |
| 0,70 - 0,80 | Gew.-% Ni, |
| 0,25 - 0,35 | Gew.-% V, |
| 0,60 - 0,70 | Gew.-% W, |
| <= 0,010 | Gew.-% Al, |
| Rest Fe | |

oder

| 28CrMoNiV4-9 | |
|---|---|
| 0,25 - 0,30 | Gew.-% C, |
| <= 0,15 | Gew.-% Si, |
| 0,30 - 0,80 | Gew.-% Mn, |
| <= 0,010 | Gew.-% P, |
| <= 0,007 | Gew.-% S, |
| 1,00 - 1,30 | Gew.-% Cr, |
| 0,70 - 1,00 | Gew.-% Mo, |
| 0,50 - 0,75 | Gew.-% Ni, |
| 0,25 - 0,35 | Gew.-% V, |
| <= 0,010 | Gew.-% AI, |
| Rest Fe | |

oder

| 23CrNiMo7-4-7 | |
|---|---|
| 0,20 - 0,26 | Gew.-% C, |
| <= 0,30 | Gew.-% Si, |
| 0,50 - 0,80 | Gew.-% Mn, |
| <= 0,010 | Gew.-% P, |
| <= 0,007 | Gew.-% S, |
| 1,70 - 2,00 | Gew.-% Cr, |
| 0,60 - 0,80 | Gew.-% Mo, |
| 0,90 - 1,20 | Gew.-% Ni, |
| Rest Fe | |

Vorteilhafterweise ist das Hinterstück aus einem 9 bis 10 Gew.-%igen Chromstahl gefertigt. Besonders vorteilhaft ist, wenn das Hinterstück das Material X12CrMoWVNbN10-1-1 oder X14CrMoVNbN10-1 umfasst.

Das Hinterstück weist dabei folgende Legierungszusammensetzung auf:

| X12CrMoWVNbN10-1-1 | |
|---|---|
| 0,10 - 0,14 | Gew.-% C, |
| <= 0,10 | Gew.-% Si, |
| 0,40 - 0,60 | Gew.-% Mn, |
| <= 0,015 | Gew.-% P, |
| <= 0,007 | Gew.-% S, |
| 10,0 - 11,0 | Gew.-% Cr, |
| 1,00 - 1,20 | Gew.-% Mo, |
| 0,60 - 0,80 | Gew.-% Ni, |
| 0,15 - 0,25 | Gew.-% V, |
| 0,95 - 1,10 | Gew.-% W, |
| <= 0,011 | Gew.-% Al, |
| 0,040 - 0,060 | Gew.-% N, |
| 0,040 - 0,060 | Gew.-% Nb, |
| Rest Fe | |

oder

| X14CrMoVNbN10-1 | |
|---|---|
| 0,11 - 0,16 | Gew.-% C, |
| <= 0,10 | Gew.-% Si, |
| 0,40 - 0,60 | Gew.-% Mn, |
| <= 0,015 | Gew.-% P, |
| <= 0,007 | Gew.-% S, |
| 10,0 - 11,0 | Gew.-% Cr, |
| 1,40 - 1,60 | Gew.-% Mo, |
| 0,50 - 0,70 | Gew.-% Ni, |
| 0,15 - 0,25 | Gew.-% V, |
| <= 0,012 | Gew.-% Al, |
| 0,040 - 0,060 | Gew.-% N, |
| 0,040 - 0,060 | Gew.-% Nb, |
| Rest Fe | |

oder

| 10% Cr-Stahl mit | |
|---|---|
| <= 0,22 | Gew.-% C, |
| <= 0,50 | Gew.-% Si, |
| 0,20 - 1,50 | Gew.-% Mn, |
| <= 0,020 | Gew.-% P, |
| <= 0,015 | Gew.-% S, |
| 8,5 - 12,5 | Gew.-% Cr, |
| 0,20 - 1,80 | Gew.-% Mo, |
| <= 1,00 | Gew.-% Ni, |
| <= 0,25 | Gew.-% V, |
| 0,5 - 3,50 | Gew.-% W, |
| <= 0,012 | Gew.-% Al, |
| <= 0,090 | Gew.-% N, |
| <= 0,10 | Gew.-% Nb, |
| 0,0005-0,0200 | Gew.-% Bor |
| 0,5 - 4,0 | Gew.-% Kobalt |
| <= 1,50 | Gew.-% Ta |
| Rest Fe. | |

Es hat sich gezeigt, dass das Zwischenmaterial Alloy617, Alloy625 oder ein auf Nickelbasis basierendes Material umfassen sollte, damit die Aufgabe besonders gut gelöst wird.

Besonders vorteilhaft ist es, wenn das Zwischenstück das Material NiCr23Co12Mo bzw. NiCr22Mo9Nb umfasst.

Das Zwischenstück weist dabei folgende Legierungszusammensetzung auf:

| Alloy617 | |
|---|---|
| 0,05 - 0,10 | Gew.-% C, |
| <= 0,20 | Gew.-% Si, |
| <= 0,20 | Gew.-% Mn, |
| <= 0,010 | Gew.-% P, |
| <= 0,010 | Gew.-% S, |
| 20,0 - 23,0 | Gew.-% Cr, |
| 8,5 - 10,0 | Gew.-% Mo, |
| 0,70 - 1,40 | Gew.-% Al, |
| 11,0 - 14,0 | Gew.-% Co, |
| <= 0,50 | Gew.-% Cu, |
| <= 2,0 | Gew.-% Fe, |
| 0,20 - 0,60 | Gew.-% Ti, |
| <= 0,006 | Gew.-% B, |
| Rest Ni | |

oder

| Alloy625 | |
|---|---|
| <= 0,10 | Gew.-% C, |
| <= 0,50 | Gew.-% Si, |
| <= 0,50 | Gew.-% Mn, |
| <= 0,015 | Gew.-% P, |
| <= 0,015 | Gew.-% S, |
| 20,0 - 23,0 | Gew.-% Cr, |
| 8,0 - 10,0 | Gew.-% Mo, |
| <= 0,40 | Gew.-% Al, |
| <= 1,0 | Gew.-% Co, |
| <= 5,0 | Gew.-% Fe, |
| <= 0,40 | Gew.-% Ti, |
| 3,15 - 4,15 | Gew.-% Nb + Ta, |
| Rest Ni | |

oder

| | |
|---|---|
| <= 0,10 | Gew.-% C, |
| <= 0,50 | Gew.-% Si, |
| <= 0,50 | Gew.-% Mn, |
| <= 0,015 | Gew.-% P, |
| <= 0,015 | Gew.-% S, |
| 20,0 - 23,0 | Gew.-% Cr, |
| 8,0 - 10,0 | Gew.-% Mo, |
| 0,2 - 1,40 | Gew.-% Al, |
| 0,0 - 14 | Gew.-% Co, |
| <= 0,50 | Gew.-% Cu, |
| <= 5,0 | Gew.-% Fe, |
| 0,1 - 0,60 | Gew.-% Ti, |
| <= 0,010 | Gew.-% B, |
| 3,15 - 4,15 | Gew.-% Nb + Ta, |
| Rest Ni. | |

Das Zwischenstück zeichnet sich durch geeignete warmfeste Eigenschaften aus, wobei der Wärmeausdehnungskoeffizient fast identisch mit dem Wärmeausdehnungskoeffizienten von 1 bis 2%igem Chromstahl ist. Dabei hat das Zwischenstück gleichzeitig ähnliche oder bessere Werkstoffeigenschaften wie der 10%ige Chromstahl.

Eine Auswirkung der erfindungsgemäßen Turbinenwelle ist, dass die Wärmespannungen und Eigenspannungen in der Schweißnaht niedriger ausfallen. Dadurch ist eine Erhöhung der Bauteilsicherheit bzw. des flexiblen Anfahrverhalten des Turbosatzes oder eine Verlagerung der Schweißnaht in höhere Temperaturbereiche von bis zu 530°C möglich.

Vorteilhafterweise wird beim Herstellungsverfahren das Zwischenstück durch ein Wolfram-Inertgasschweißen angebracht.

Besonders vorteilhaft ist es, wenn nach der Schweißung eine Wärmebehandlung erfolgt, die folgende Schritte umfasst:
- Aufheizen auf Temperaturen zwischen 620°C und 720°C,
- Haltezeit 5 bis 20 Stunden,
- Ofenkühlung bis auf eine Temperatur, die im Wesentlichen bei 300°C liegt,
- Kühlung an Luft.

Das Zwischenstück wird nach folgenden Kriterien ausgesucht: zum einen sollte das Zwischenstück mindestens gleiche warmfeste Eigenschaften wie 10%igen Chromstahl aufweisen und zum anderen sollte der Ausdehnungskoeffizient ähnlich oder gleich wie der des 1 bis 2%igen Chromstahls sein. Der Wert für den Ausdehnungskoeffizient des Zwischenstückes sollte zwischen 98% und 102% des Wertes für den Ausdehnungskoeffizienten des 1 bis 2%igen Chromstahls liegen.

Die unterschiedlichen Wärmeausdehnungskoeffizienten zwischen dem 10%igen Chromstahl und dem Zwischenstück aus einer Ni/Co-Basislegierung, z. B. A617, A625 haben sozusagen einen vernachlässigbaren Effekt, da die Wärmespannungen in einem Bereich auftreten, wo beide Werkstoffe, also der 10%ige Chromstahl und das Zwischenstück hohe Festigkeiten aufweisen.

Nachfolgend werden Ausführungsbeispiele der Erfindung anhand einer Zeichnung näher erläutert. Darin zeigt schematisch und nicht maßstäblich:

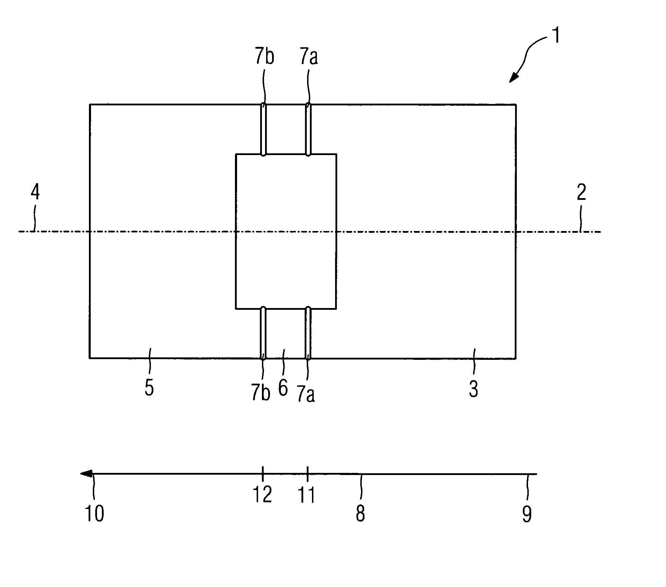

- Figur 1: Schnittbild durch eine erfindungsgemäße geschweißte Turbinenwelle.

In der stark vereinfachten Figur sind nur jene Teile dargestellt, die für das Verständnis der Funktion bzw. der Erfindung von Bedeutung sind.

In der Figur ist ein Schnitt durch eine geschweißte Turbinenwelle 1 dargestellt. Die Turbinenwelle ist um die Rotationsachse 2 rotationssymmetrisch ausgebildet. Eine Turbinenwelle wird in der Regel thermisch unterschiedlich belastet. In dem Bereich niedriger thermischer Belastung ist ein Vorderstück 3 aus einem ersten Material angeordnet. In Achsrichtung 4 ist dahinter ein Hinterstück 5 im Bereich hoher thermischer Belastung aus einem zweiten Material angeordnet. Das erste und zweite Material weisen unterschiedliche Wärmeausdehnungskoeffizienten auf und die Zeitstandfestigkeit des zweiten Materials ist höher als die Zeitstandfestigkeit des ersten Materials.

Zwischen dem Vorderstück 3 und dem Hinterstück 5 ist ein Zwischenstück 6 aus einem Zwischenmaterial angeordnet. Das Zwischenmaterial weist einen im Wesentlichen gleich großen Wärmeausdehnungskoeffizienten wie das erste Material und eine gleich große Zeitstandfestigkeit wie das zweite Material auf.

Das Zwischenstück kann durch Wolfram-Inertgasschweißen angebracht werden.

Nach der Schweißung erfolgt eine Wärmebehandlung. Die Wärmebehandlung umfasst folgende Schritte:
- Aufheizen auf Temperaturen zwischen 620°C und 720°C,
- Haltezeit 5 bis 20 Stunden,
- Ofenkühlung bis auf eine Temperatur, die im Wesentlichen bei 300°C liegt,
- Kühlung an Luft.

Das Vorderstück kann aus einem 1- bis 2-Gew.-%igem Chromstahl gefertigt sein.

Das Vorderstück kann das Material 23 CrMoNiWV8-8, 30 CrMo-NiV5-11 oder andere 1 bis 2%ige Chromstähle nach SEW 555 umfassen.

Das Vorderstück kann folgende Legierungszusammensetzung aufweisen:

| | |
|---|---|
| 0,28 - 0,34 | Gew.-% C, |
| <= 0,15 | Gew.-% Si, |
| 0,30 - 0,80 | Gew.-% Mn, |
| <= 0,010 | Gew.-% P, |
| <= 0,007 | Gew.-% S, |
| 1,10 - 1,40 | Gew.-% Cr, |
| 1,00 - 1,20 | Gew.-% Mo, |
| 0,50 - 0,75 | Gew.-% Ni, |
| 0,25 - 0,35 | Gew.-% V, |
| <= 0,010 | Gew.-% Al, |
| Rest Fe. | |

Das Vorderstück kann alternativ dazu folgende Legierungszusammensetzung aufweisen:

| | |
|---|---|
| 0,20 - 0,24 | Gew.-% C, |
| <= 0,10 | Gew.-% Si, |
| 0,60 - 0,80 | Gew.-% Mn, |
| <= 0,010 | Gew.-% P, |
| <= 0,007 | Gew.-% S, |
| 2,00 - 2,20 | Gew.-% Cr, |
| 0,80 - 0,90 | Gew.-% Mo, |
| 0,70 - 0,80 | Gew.-% Ni, |
| 0,25 - 0,35 | Gew.-% V, |
| 0,60 - 0,70 | Gew.-% W, |
| <= 0,010 | Gew.-% Al, |
| Rest Fe | |

oder

| | |
|---|---|
| 0,28 - 0,34 | Gew.-% C, |
| <= 0,15 | Gew.-% Si, |
| 0,30 - 0,80 | Gew.-% Mn, |
| <= 0,010 | Gew.-% P, |
| <= 0,007 | Gew.-% S, |
| 1,10 - 1,40 | Gew.-% Cr, |
| 1,00 - 1,20 | Gew.-% Mo, |
| 0,50 - 0,75 | Gew.-% Ni, |
| 0,25 - 0,35 | Gew.-% V, |
| <= 0,010 | Gew.-% Al, |
| Rest Fe | |

oder

| | |
|---|---|
| 0,20 - 0,35 | Gew.-% C, |
| <= 0,30 | Gew.-% Si, |
| 0,30 - 0,80 | Gew.-% Mn, |
| <= 0,010 | Gew.-% P, |
| <= 0,007 | Gew.-% S, |
| 1,00 - 2,20 | Gew.-% Cr, |
| 0,70 - 1,20 | Gew.-% Mo, |
| 0,50 - 1,20 | Gew.-% Ni, |
| 0,25 - 0,35 | Gew.-% V, |
| <= 0,010 | Gew.-% Al, |
| 0,30 - 1,00 | Gew.-% W |
| Rest Fe. | |

Das Hinterstück 5 ist aus einem 10 Gew.-%igen Chromstahl gefertigt.

Das Hinterstück kann aus dem Material X12CrMoWVNbN10-1-1 oder X14CrMoVNbN10-1 oder P91, P92, F32, Co etc. hergestellt sein.

Das Hinterstück kann folgende Legierungszusammensetzung aufweisen:

| X12CrMoWVNbN10-1-1 | |
|---|---|
| 0,10 - 0,14 | Gew.-% C, |
| <= 0,10 | Gew.-% Si, |
| 0,40 - 0,60 | Gew.-% Mn, |
| <= 0,015 | Gew.-% P, |
| <= 0,007 | Gew.-% S, |
| 10,0 - 11,0 | Gew.-% Cr, |
| 1,00 - 1,20 | Gew.-% Mo, |
| 0,60 - 0,80 | Gew.-% Ni, |
| 0,15 - 0,25 | Gew.-% V, |
| 0,95 - 1,10 | Gew.-% W, |
| <= 0,010 | Gew.-% Al, |
| 0,040 - 0,060 | Gew.-% N, |
| 0,040 - 0,060 | Gew.-% Nb, |
| Rest Fe | |

oder

| X14CrMoVNbN10-1 | |
|---|---|
| 0,11 - 0,16 | Gew.-% C, |
| <= 0,10 | Gew.-% Si, |
| 0,40 - 0,60 | Gew.-% Mn, |
| <= 0,015 | Gew.-% P, |
| <= 0,007 | Gew.-% S, |
| 10,0 - 11,0 | Gew.-% Cr, |
| 1,40 - 1,60 | Gew.-% Mo, |
| 0,50 - 0,70 | Gew.-% Ni, |
| 0,15 - 0,25 | Gew.-% V, |
| <= 0,012 | Gew.-% Al, |
| 0,040 - 0,060 | Gew.-% N, |
| 0,040 - 0,060 | Gew.-% Nb, |
| Rest Fe | |

oder

| 10% Cr-Stahl mit | |
|---|---|
| <= 0,22 | Gew.-% C, |
| <= 0,50 | Gew.-% Si, |
| 0,20 - 1,50 | Gew.-% Mn, |
| <= 0,020 | Gew.-% P, |
| <= 0,015 | Gew.-% S, |
| 8,5 - 12,5 | Gew.-% Cr, |
| 0,20 - 1,80 | Gew.-% Mo, |
| <= 1,00 | Gew.-% Ni, |
| <= 0,25 | Gew.-% V, |
| 0,5 - 3,50 | Gew.-% W, |
| <= 0,012 | Gew.-% Al, |
| <= 0,090 | Gew.-% N, |
| <= 0,10 | Gew.-% Nb, |
| 0,0005-0,0150 | Gew.-% Bor |
| 0,5 - 4,0 | Gew.-% Kobalt |
| <= 1,50 | Gew.-% Ta |
| Rest Fe. | |

Das Zwischenstück 6 ist aus einem warmfesten Material gefertigt. Das Zwischenstück 6 kann aus dem Material Alloy617, Alloy625 oder ein auf Nickel-Basis basierendes Material hergestellt sein.
Das Zwischenstück 6 kann das Material NiCr23Co12Mo und NiCr22Mo9Nb aufweisen.
Das Zwischenstück 6 kann ein geschmiedetes, gegossenes oder pulvermetallurgisches Teil sein. Des Weiteren kann das Zwischenstück 6 aus einem aufgeschmolzenen Schweißgut gebildet sein.

Das Zwischenstück kann folgende Legierungszusammensetzung aufweisen:

| Alloy617 | |
|---|---|
| 0,05 - 0,10 | Gew.-% C, |
| <= 0,20 | Gew.-% Si, |
| <= 0,20 | Gew.-% Mn, |
| <= 0,010 | Gew.-% P, |
| <= 0,010 | Gew.-% S, |
| 20,0 - 23,0 | Gew.-% Cr, |
| 8,5 - 10,0 | Gew.-% Mo, |
| 0,70 - 1,40 | Gew.-% Al, |
| 11,0 - 14,0 | Gew.-% Co, |
| <= 0,50 | Gew.-% Cu, |
| <= 2,0 | Gew.-% Fe, |
| 0,20 - 0,60 | Gew.-% Ti, |
| <= 0,006 | Gew.-% B, |
| Rest Ni | |

oder

| Alloy625 | |
|---|---|
| <= 0,10 | Gew.-% C, |
| <= 0,50 | Gew.-% Si, |
| <= 0,50 | Gew.-% Mn, |
| <= 0,015 | Gew.-% P, |
| <= 0,015 | Gew.-% S, |
| 20,0 - 23,0 | Gew.-% Cr, |
| 8,0 - 10,0 | Gew.-% Mo, |
| <= 0,40 | Gew.-% Al, |
| <= 1,0 | Gew.-% Co, |
| <= 5,0 | Gew.-% Fe, |
| <= 0,40 | Gew.-% Ti, |
| 3,15 - 4,15 | Gew.-% Nb + Ta, |
| Rest Ni | |

oder

| | |
|---|---|
| <= 0,10 | Gew.-% C, |
| <= 0,50 | Gew.-% Si, |
| <= 0,50 | Gew.-% Mn, |
| <= 0,015 | Gew.-% P, |
| <= 0,015 | Gew.-% S, |
| 20,0 - 23,0 | Gew.-% Cr, |
| 8,0 - 10,0 | Gew.-% Mo, |
| 0,2 - 1,40 | Gew.-% Al, |
| 0,0 - 14 | Gew.-% Co, |
| <= 0,50 | Gew.-% Cu, |
| <= 5,0 | Gew.-% Fe, |
| 0,1 - 0,60 | Gew.-% Ti, |
| <= 0,010 | Gew.-% B, |
| 3,15 - 4,15 | Gew.-% Nb + Ta, |
| Rest Ni. | |

Die in der Schweißnaht 7a auftretenden Wärmespannungen und Eigenspannungen sind dadurch vergleichsweise sehr niedrig. Die Schweißnaht 7b besteht aus warmfesteren Werkstoffen, für die höhere Belastungen zulässig sind.

Der Pfeil 8 soll einen Temperaturgradienten darstellen. Die Temperatur an der Stelle 9 ist hierbei niedriger als die Temperatur an der Stelle 10. Die Schweißnaht der erfindungsgemäßen Turbinenwelle liegt an den Stellen 11 bzw. 12. Diese Stellen können bei Temperaturen um die 540°C liegen. Demgegenüber könnte gemäß dem Stand der Technik die Schweißnaht zwischen einem ersten und zweiten Material, ohne Zwischenstück, bei lediglich 450°C liegen.

## Patentansprüche

1. Welle (1) für eine Strömungsmaschine, umfassend ein Vorderstück (3) aus einem ersten Material und einem in Achsrichtung dahinter angeordneten Hinterstück (5) aus einem zweiten Material,
wobei das erste und zweite Material unterschiedliche Wärmeausdehnungskoeffizienten aufweisen und
die Zeitstandfestigkeit des zweiten Materials höher ist als die Zeitstandfestigkeit des ersten Materials,
**dadurch gekennzeichnet, dass**
ein Zwischenstück (6) aus einem Zwischenmaterial zwischen dem Vorderstück (3) und dem Hinterstück (5) angeordnet ist, wobei das Zwischenmaterial einen im Wesentlichen ähnlichen oder gleich großen Wärmeausdehnungskoeffizienten wie das erste Material und
eine im Wesentlichen mindestens gleich große Zeitstandfestigkeit wie das zweite Material aufweist.

2. Welle (1) nach Anspruch 1,
wobei das Zwischenstück (6) an das Vorderstück (3) und an das Hinterstück (5) angeschweißt ist.

3. Welle (1) nach Anspruch 1 oder 2,
wobei das Vorderstück (3) aus einem 1 bis 2 Gew.-%igen Cr-Stahl gefertigt ist.

4. Welle (1) nach Anspruch 3,
wobei das Vorderstück (3) das Material 23CrMoNiWV8-8 oder 30CrMoNiV5-11 umfasst.

5. Welle (1) nach Anspruch 3 oder 4,
wobei das Vorderstück (3) folgende Legierungszusammensetzung aufweist:
| | |
|---|---|
| 0,28 - 0,34 | Gew.-% C, |
| <= 0,15 | Gew.-% Si, |
| 0,30 - 0,80 | Gew.-% Mn, |
| <= 0,010 | Gew.-% P, |
| <= 0,007 | Gew.-% S, |
| 1,10 - 1,40 | Gew.-% Cr, |
| 1,00 - 1,20 | Gew.-% Mo, |
| 0,50 - 0,75 | Gew.-% Ni, |
| 0,25 - 0,35 | Gew.-% V, |
| <= 0,010 | Gew.-% Al, |
| Rest Fe. | |

6. Welle (1) nach Anspruch 3 oder 4,
wobei das Vorderstück (3) folgende Legierungszusammensetzung aufweist:
| | |
|---|---|
| 0,20 - 0,24 | Gew.-% C, |
| <= 0,10 | Gew.-% Si, |
| 0,60 - 0,80 | Gew.-% Mn, |
| <= 0,010 | Gew.-% P, |
| <= 0,007 | Gew.-% S, |
| 2,00 - 2,20 | Gew.-% Cr, |
| 0,80 - 0,90 | Gew.-% Mo, |
| 0,70 - 0,80 | Gew.-% Ni, |
| 0,25 - 0,35 | Gew.-% V, |
| 0,60 - 0,70 | Gew.-% W, |
| <= 0,010 | Gew.-% Al, |
| Rest Fe. | |

7. Welle (1) nach einem der vorhergehenden Ansprüche,
wobei das Hinterstück (5) aus einem 10 Gew.-%igen Cr-Stahl gefertigt ist.

8. Welle (1) nach Anspruch 7,
wobei das Hinterstück (5) das Material X12CrMoWVNbN10-1-1, X14CrMoVNbN10-1 umfasst.

9. Welle (1) nach Anspruch 7 oder 8,
wobei das Hinterstück (5) folgende Legierungszusammensetzung aufweist:
| | |
|---|---|
| 0,10 - 0,14 | Gew.-% C, |
| <= 0,10 | Gew.-% Si, |
| 0,40 - 0,60 | Gew.-% Mn, |
| <= 0,015 | Gew.-% P, |
| <= 0,007 | Gew.-% S, |
| 10,0 - 11,0 | Gew.-% Cr, |
| 1,00 - 1,20 | Gew.-% Mo, |
| 0,60 - 0,80 | Gew.-% Ni, |
| 0,15 - 0,25 | Gew.-% V, |
| 0,95 - 1,10 | Gew.-% W, |
| <= 0,010 | Gew.-% Al, |
| 0,040 - 0,060 | Gew.-% N, |
| 0,040 - 0,060 | Gew.-% Nb, |
| Rest Fe. | |

10. Welle (1) nach Anspruch 7 oder 8,
wobei das Hinterstück (5) folgende Legierungszusammensetzung aufweist:
| | |
|---|---|
| <= 0,22 | Gew.-% C, |
| <= 0,50 | Gew.-% Si, |
| 0,20 - 1,50 | Gew.-% Mn, |
| <= 0,020 | Gew.-% P, |
| <= 0,015 | Gew.-% S, |
| 8,5 - 12,5 | Gew.-% Cr, |
| 0,20 - 1,80 | Gew.-% Mo, |
| <= 1,00 | Gew.-% Ni, |
| <= 0,25 | Gew.-% V, |
| 0,5 - 3,50 | Gew.-% W, |
| <= 0,012 | Gew.-% Al, |
| <= 0,090 | Gew.-% N, |
| <= 0,10 | Gew.-% Nb, |
| 0,0005 - 0,0150 | Gew.-% Bor, |
| 0,5 - 4,0 | Gew.-% Kobalt, |
| <= 1,5 | Gew.-% Ta, |
| Rest Fe. | |

11. Welle (1) nach einem der vorhergehenden Ansprüche,
wobei das Zwischenstück (6) aus einem warmfesten Material gefertigt ist.

12. Welle (1) nach einem der vorhergehenden Ansprüche,
wobei das Zwischenstück (6) ein geschmiedetes Teil ist.

13. Welle (1) nach einem der Ansprüche 1 bis 11,
wobei das Zwischenstück (6) ein gegossenes Teil ist.

14. Welle (1) nach einem der Ansprüche 1 bis 11,
wobei das Zwischenstück (6) ein pulvermetallurgisches Teil ist.

15. Welle (1) nach einem der Ansprüche 1 bis 11,
wobei das Zwischenstück (6) durch aufgeschmolzenes Schweißgut gebildet ist.

16. Welle (1) nach einem der Ansprüche 11 bis 15,
wobei das Zwischenstück (6) das Material Alloy617, Alloy625 oder ein auf Ni-Basis basierendes Material umfasst.

17. Welle (1) nach Anspruch 16,
wobei das Zwischenstück (6) das Material NiCr23Co12Mo umfasst.

18. Welle (1) nach einem der Ansprüche 11 bis 17,
wobei das Zwischenstück (6) folgende Legierungszusammensetzung aufweist:
| | |
|---|---|
| 0,05 - 0,10 | Gew.-% C, |
| <= 0,20 | Gew.-% Si, |
| <= 0,20 | Gew.-% Mn, |
| <= 0,010 | Gew.-% P, |
| <= 0,010 | Gew.-% S, |
| 20,0 - 23,0 | Gew.-% Cr, |
| 8,5 - 10,0 | Gew.-% Mo, |
| 0,70 - 1,40 | Gew.-% Al, |
| 11,0 - 14,0 | Gew.-% Co, |
| <= 0,50 | Gew.-% Cu, |
| <= 2,0 | Gew.-% Fe, |
| 0,20 - 0,60 | Gew.-% Ti, |
| <= 0,006 | Gew.-% B, |
| Rest Ni. | |

19. Welle (1) nach einem der vorhergehenden Ansprüche,
wobei das Vorderstück (3), das Hinterstück (5) und das Zwischenstück (6) im Wesentlichen rotationssymmetrisch zur Wellenrichtung ausgebildet ist.

20. Verfahren zum Herstellen einer Welle (1) für eine Strömungsmaschine,
wobei ein Vorderstück (3) aus einem ersten Material und ein Hinterstück (5) aus einem zweiten Material miteinander verbunden werden,
**dadurch gekennzeichnet, dass**
ein Zwischenstück (6) aus einem warmfesten Material zwischen das Vorderstück (3) und das Hinterstück (5) angeordnet wird,
wobei das Vorderstück (3) und das Hinterstück (5) an das Zwischenstück (6) angeschweißt wird.

21. Verfahren nach Anspruch 15,
bei dem das Zwischenstück (6) durch Wolfram-Inertgasschwei-ßen (WIG) angebracht wird.

22. Verfahren nach Anspruch 15 oder 16,
bei dem nach der Schweißung eine Wärmebehandlung erfolgt.

23. Verfahren nach Anspruch 17,
bei dem die Wärmebehandlung folgende Schritte umfasst:
- Aufheizen auf Temperaturen zwischen 620°C und 720°C,
- Haltezeit 5 bis 20 Stunden,
- Ofenkühlung bis auf eine Temperatur, die im Wesentlichen bei 300°C liegt,
- Kühlung an Luft.
